# EUROPÄISCHE PATENTSCHRIFT

(11) **EP 3 501 085 B1**
(45) Veröffentlichungstag und Bekanntmachung des Hinweises auf die Patenterteilung: **09.12.2020**
(21) Anmeldenummer: 17746481.5
(22) Anmeldetag: 02.08.2017
(51) Int. Cl.: H02K 1/32, H02K 5/20, H02K 9/19

(54) **ELEKTRISCHE MASCHINE UND FAHRZEUG MIT DER ELEKTRISCHEN MASCHINE**
ELECTRICAL MACHINE AND VEHICLE COMPRISING THE ELECTRICAL MACHINE
MACHINE ÉLECTRIQUE ET VÉHICULE ÉQUIPÉ DE LA MACHINE ÉLECTRIQUE

(30) Priorität: 17.08.2016 DE 102016215423
(43) Veröffentlichungstag der Anmeldung: 26.06.2019
(73) Patentinhaber: Bayerische Motoren Werke Aktiengesellschaft, 80809 München (DE)
(72) Erfinder: BARTI, Endre, 80689 München (DE); EL KHAWLY, Zakaria, 80807 München (DE); HUBER, Andreas, 84573 Schönberg (DE); VICHOS, Anastasios, 85591 Vaterstetten (DE)
(86) Internationale Anmeldenummer: PCT/EP2017/069494
(87) Internationale Veröffentlichungsnummer: WO 2018/033388

(56) Entgegenhaltungen:
- WO-A1-2010/128632
- WO-A1-2015/107679
- DE-A1-102014 205 017
- JP-A- 2006 067 777
- JP-A- 2011 097 784
- JP-A- 2014 155 243
- JP-A- 2016 059 155
- US-A1- 2012 104 884
- US-A1- 2015 137 632

## Beschreibung

Die Erfindung betrifft eine elektrische Maschine und ein Fahrzeug mit der elektrischen Maschine.

Im Betrieb einer elektrischen Maschine, wie beispielsweise ein Generator oder ein Elektromotor, erfolgt eine Wärmefreisetzung in der elektrischen Maschine, wobei die Wärmefreisetzung zu einer Temperaturerhöhung der elektrischen Maschine führt. Dadurch führt die maximal zulässige Temperatur für die elektrische Maschine zu einer Begrenzung der von der elektrischen Maschine dauerhaft lieferbaren Leistung. Daher ist es erforderlich die elektrische Maschine in ihrem Betrieb zu kühlen. Dabei gestaltet sich besonders die Kühlung des Rotors der elektrischen Maschine als schwierig.

Herkömmlich wird der Rotor gekühlt, indem der Rotor mit einer hohl ausgeführten Welle ausgestattet wird, innerhalb derer im Betrieb der elektrischen Maschine eine Flüssigkeit geströmt wird. Nachteilig hierbei ist jedoch, dass ein langer Wärmeleitpfad von der radialen Außenseite des Rotors bis zu der Flüssigkeit vorliegt. Zudem ist die im Inneren der Welle angeordnete Oberfläche, die mit der Flüssigkeit in Kontakt tritt und via die die Wärme von dem Rotor auf die Flüssigkeit übertragen wird, klein. Zudem stellt in dem Fall, dass auf der Welle ein Blechpaket angeordnet ist, die Grenzfläche zwischen der Welle und dem Blechpaket einen thermischen Widerstand für die Wärmeleitung dar. Dadurch ist insgesamt die Kühlung des Rotors mit der hohl ausgeführten Welle nachteilig wenig effektiv.

In US 2015/0137632 A1 ist eine elektrische Maschine gemäß dem Oberbegriff des Anspruchs 1 offenbart.

Aufgabe der Erfindung ist es daher, eine elektrische Maschine und ein Fahrzeug mit der elektrischen Maschine zu schaffen, wobei die elektrische Maschine, insbesondere deren Rotor, effektiv kühlbar ist.

Die erfindungsgemäße elektrische Maschine weist einen Rotor auf, der eine Hohlwelle, die in ihrem Inneren einen sich in Axialrichtung erstreckenden Hohlwellenaxialkanal begrenzt, in den im Betrieb der elektrischen Maschine ein Kühlfluid einströmbar ist, ein radial außen an der Hohlwelle angebrachtes Rotorblechpaket, das zwei axiale Stirnseiten aufweist, und einen von dem Rotorblechpaket begrenzten, sich in der Axialrichtung von der einen der beiden Stirnseiten des Rotorblechpakets zu der anderen der beiden Stirnseiten des Rotorblechpakets erstreckenden Axialkanal aufweist, der fluidleitend mit dem Hohlwellenaxialkanal verbunden ist, so dass im Betrieb der elektrischen Maschine das Kühlfluid von dem Hohlwellenaxialkanal via den Axialkanal an die Stirnseiten strömbar ist und durch Fliehkraft stromab des Axialkanals nach radial außen strömbar ist, wobei der Rotor einen Radialkanal aufweist, via den der Axialkanal fluidleitend mit dem Hohlwellenaxialkanal verbunden ist, und das Rotorblechpaket mindestens einen Vorsprung aufweist, der von der radialen Innenseite des Rotorblechpakets absteht, und die Hohlwelle mindestens eine Aussparung aufweist, die in die radiale Außenseite der Hohlwelle eingebracht ist, wobei der Vorsprung in die Aussparung eingreift und der Radialkanal sich innerhalb des Vorsprungs erstreckt. Dadurch gerät das Kühlfluid direkt mit dem Blechpaket in Kontakt und kann dieses somit effektiv kühlen. Zudem fällt die Grenzfläche zwischen der Hohlwelle und dem Rotorblechpaket als Barriere für die Wärmeleitung zu dem Kühlfluid weg. Außerdem ist es möglich den Axialkanal derart anzuordnen, dass der Wärmeleitpfad zu dem Kühlfluid innerhalb des Rotors kurz ist, wodurch die Kühlung ebenfalls effektiv ist. Weil das Kühlfluid via das Blechpaket zurückgeführt wird, ist eine Rückführung innerhalb der Welle nicht erforderlich, so dass die Welle in Radialrichtung kurz ausgeführt werden kann.

Die elektrische Maschine weist bevorzugt einen Stator auf, der radial außerhalb des Rotors angeordnet ist, ein Statorblechpaket, das zwei axiale Stirnseiten aufweist, und eine Wicklung elektrischer Leiter aufweist, wobei die axialen Stirnseiten des Statorblechpakets fluchtend mit den axialen Stirnseiten des Rotorblechpakets angeordnet sind und die elektrischen Leiter an den axialen Stirnseiten des Statorblechpakets aus dem Statorblechpaket austreten und radial außerhalb des Statorblechpakets Wickelköpfe bilden, so dass das stromab des Axialkanals nach radial außen strömbare Kühlfluid auf die Wickelköpfe des Stators treffen kann und diese somit kühlen kann. Damit wird das Kühlfluid verwendet, um sowohl den Rotor als auch die Wickelköpfe des Stators zu kühlen.

Es ist bevorzugt, dass der Axialkanal zwischen der Hohlwelle und dem Rotorblechpaket angeordnet ist und von der Hohlwelle und dem Rotorblechpaket begrenzt ist. Damit kann das im Betrieb in dem Axialkanal strömende Kühlfluid sowohl die Hohlwelle als auch das Blechpaket kühlen. Dabei ist bevorzugt, dass die Hohlwelle und/oder das Rotorblechpaket eine Aussparung aufweisen, die den Axialkanal bilden.

Alternativ ist bevorzugt, dass der Axialkanal in Radialrichtung innen und außen von dem Rotorblechpaket begrenzt ist. Damit kann das Rotorblechpaket besonders effektiv gekühlt werden. Besonders bevorzugt ist, dass der Axialkanal in der Mitte zwischen der radialen Innenseite und der radialen Außenseite des Rotorblechpakets angeordnet ist. Damit können die Wärmeleitpfade zu dem Axialkanal innerhalb des Rotorblechpakets minimiert werden.

Bevorzugt ist eine Mehrzahl der Axialkanäle vorgesehen, die in Umfangsrichtung gleichmäßig verteilt angeordnet sind. Dadurch kann der Rotor in Umfangsrichtung gleichmäßig gekühlt werden, wodurch besonders heiße Punkte in dem Rotor vermieden werden können.

Der Rotor weist einen Radialkanal auf, via den der Axialkanal fluidleitend mit dem Hohlwellenaxialkanal verbunden ist. Falls die elektrische Maschine eine Mehrzahl der Axialkanäle aufweist, kann für jeden der Axialkanäle ein jeweiliger Radialkanal vorgesehen sein, der den jeweiligen Axialkanal fluidleitend mit dem Hohlwellenaxialkanal verbindet.

Das Rotorblechpaket weißt üblicherweise einen zylindrischen Innendurchmesser auf der etwas kleiner ist als der entsprechende Außendurchmesser der Rotorwelle. Beim Aufschrumpfen des Blechpakes auf die Rotorwelle wird durch eine thermische Weitung durch Erhitzen des Rotorsblechs und/oder Kühlen der Welle ein verdrehsicherer mechanischer Presssitz hergestellt. Dazu sind allerdings sehr genaue Fertigungstoleranzen und ein langwieriger und teurer Ofenprozess erforderlich.

Alternativ können die einzelnen Bleche des Rotorblechpakets eine Vielzahl um den Innendurchmesser verteilte Aussparungen aufweisen. Dadurch entsteht ein Zackenmuster welches das ansonsten übliche Kreisloch unterbricht. Die Zacken sind dabei vorteilhaft derart angeordnet, dass beim Stapeln der Bleche zum Blechpaket immer eine Aussparung und eine Zacke übereinander zu liegen kommen. Das hat den Vorteil, dass die Zacken der Bleche beim Montieren auf der Welle Federn können und sich das Blechpaket und die Rotorwelle dadurch bei kleineren Temperaturdifferenzen fügen lassen, was den Prozess vereinfacht und beschleunigt. Zudem lassen sich bei der Herstellung der Zacken/Ausparungen gleichzeitig auch einfach die fluidführenden Axialkanäle mit integrieren.

Es ist bevorzugt, dass die elektrische Maschine ein Maschinengehäuse aufweist, das den Rotor und den Stator einhaust. Dadurch sind der Rotor und der Stator vor Umgebungseinflüssen schützbar und zudem kann das aus den Stirnseiten des Rotorblechpakets austretende Kühlfluid aufgefangen werden. Dabei ist es bevorzugt, dass das Maschinengehäuse ein an dem unteren Ende des Maschinengehäuses angeordnetes Durchgangsloch aufweist, via das das Kühlfluid aus dem Maschinengehäuse austreten kann. Somit ist das aus den Stirnseiten des Rotorblechpakets austretende Kühlfluid einsammelbar und anschließend wieder in die Hohlwelle einströmbar.

Das Maschinengehäuse weist bevorzugt einen Gehäusekühlkanal auf, durch das zum Kühlen des Maschinengehäuses ein weiteres Kühlfluid strömbar ist, insbesondere ist die elektrische Maschine eingerichtet eine Wasser und Glykol aufweisende Mischung durch den Gehäusekühlkanal zu strömen.

Damit kann das aus den Stirnseiten des Rotorblechpakets ausgetretene Kühlfluid gekühlt werden und kann sich somit bereits wieder eignen, um zum Erneuten Kühlen der elektrischen Maschine in die Hohlwelle eingeströmt zu werden.

Es ist bevorzugt, dass das Kühlfluid elektrisch nicht leitfähig ist. Damit können die Wickelköpfe selbst dann mit dem Kühlfluid gekühlt werden, wenn die elektrischen Leiter der Wickelköpfe nicht elektrisch isoliert sind. Das Kühlfluid ist bevorzugt ein Öl, insbesondere ein Getriebeöl.

Die elektrische Maschine ist bevorzugt ein Elektromotor, insbesondere für ein Fahrzeug.

Das erfindungsgemäße Fahrzeug weist die erfindungsgemäße elektrische Maschine auf, wobei das Fahrzeug eine Fördereinrichtung aufweist, die eingerichtet ist das Kühlfluid in die Hohlwelle einzuströmen, wobei die Fördereinrichtung insbesondere eingerichtet ist, ein Getriebeöl des Fahrzeugs zu fördern.

Im Folgenden wird die Erfindung anhand der beigefügten schematischen Zeichnung näher erläutert. Die Figur zeigt einen Längsschnitt durch eine erfindungsgemäße elektrische Maschine.

Wie es aus der Figur ersichtlich ist, weist eine elektrische Maschine 1, beispielsweise ein Elektromotor für ein Fahrzeug, einen im Betrieb der elektrischen Maschine 1 rotierbaren Rotor 4 und einen feststehenden Stator 5 auf. Der Rotor 4 weist eine Hohlwelle 2 und einen im Inneren der Hohlwelle 2 angeordneten und sich in Axialrichtung erstreckenden Hohlwellenaxialkanal 9 auf, der von der Hohlwelle 2 begrenzt ist und in den im Betrieb der elektrischen Maschine 1 ein Kühlfluid einströmbar ist. Das Kühlfluid kann elektrisch nicht leitfähig sein. Beispielsweise kann das Kühlfluid ein Öl und insbesondere für den Fall, dass die elektrische Maschine in einem Fahrzeug eingebaut ist, ein Getriebeöl, sein. Weiterhin weist der Rotor 4 ein Rotorblechpaket 3 auf, das radial außen an der Hohlwelle 2 angebracht ist. Der Rotor 4 weist Permanentmagnete und/oder elektrischer Leiter zum Erzeugen eines Magnetfelds auf, die in das Rotorblechpaket 3 eingebracht sind. Das Rotorblechpaket 3 weist eine erste axiale Stirnseite 34 und eine zweite axiale Stirnseite 35 auf, die in Axialrichtung äußeren Enden des Rotorblechpakets 3 sind. Es ist denkbar, dass das Rotorblechpakets 3 an seinen äußeren Enden Endscheiben aufweist. In diesem Fall sind die axialen Stirnseiten die außen liegenden Enden der Endscheiben. Zudem ist denkbar, dass an den axialen Stirnseiten 34, 35 Rotorwickelköpfe oder Kurzschlussringe angeordnet sind. Weiterhin weist der Rotor 4 einen von dem Rotorblechpaket 3 begrenzten, sich in der Axialrichtung von der einen der beiden Stirnseiten 34 des Rotorblechpakets 3 zu der anderen der beiden Stirnseiten 35 des Rotorblechpakets 3 erstreckenden Axialkanal 11 auf, der fluidleitend mit dem Hohlwellenaxialkanal 9 verbunden ist, so dass im Betrieb der elektrischen Maschine 1 das Kühlfluid von dem Hohlwellenaxialkanal 9 via den Axialkanal 11 an die beiden Stirnseiten 34, 35 strömbar ist und durch Fliehkraft stromab des Axialkanals 11 nach radial außen strömbar ist.

Zum Einströmen des Kühlfluids in den Hohlwellenaxialkanal 9 weist die elektrische Maschine 1 ein feststehendes Rohr 14 auf, das koaxial mit der Hohlwelle 2 angeordnet ist und mit einem Längsende des Rohrs 14 in einem Längsende der Hohlwelle 2 angeordnet ist, so dass das Kühlfluid via das Rohr 14 in den Hohlwellenaxialkanal 9 einströmbar ist. Zum Abdichten des Ringspalts zwischen dem Rohr 14 und der Hohlwelle 2 ist zwischen der radialen Außenseite des Rohrs 14 und der radialen Innenseite der Hohlwelle 2 eine Spaltdichtung 15 angeordnet. Der Innendurchmesser des Rohrs 14 kann gleich dem Durchmesser des Hohlwellenaxialkanals 9 sein, damit das Kühlfluid möglichst ablösefrei und damit mit einem möglichst geringen Strömungswiderstand von dem Rohr 14 in den Hohlwellenaxialkanal 9 eintreten kann.

Wie es aus der Figur ersichtlich ist, weist der Rotor 4 zwei der Axialkanäle 11 auf, die in Umfangsrichtung gegenüberliegend angeordnet sind. Dabei ist auch eine beliebige andere Anzahl der Axialkanäle 11 denkbar, wobei die Axialkanäle insbesondere in Umfangsrichtung gleichmäßig verteilt angeordnet sind. Der Hohlwellenaxialkanal 9 erstreckt sich im Wesentlichen von dem einen Längsende der Hohlwelle 2 bis zur axialen Mitte des Rotorblechpakets 3. Von der axialen Mitte des Rotorblechpakets 3 erstreckt sich für jeden der Axialkanäle 11 ein Radialkanal 10, via den der jeweilige Axialkanal 11 fluidleitend mit dem Hohlwellenaxialkanal 9 verbunden ist. Es ist denkbar, dass das Rotorblechpaket 3 eine Mehrzahl an Vorsprüngen, insbesondere Zacken, aufweist, die von der radialen Innenseite des Rotorblechpakets 3 abstehen, und die Hohlwelle 2 eine Mehrzahl an Aussparungen aufweist, die in die radiale Außenseite der Hohlwelle 2 eingebracht sind, wobei die Vorsprünge in die Aussparungen eingreifen und mindestens einer der Radialkanäle 10 sich innerhalb einem der Vorsprünge erstreckt. Die Vorsprünge können bei aufeinanderfolgenden Blechen des Rotorblechpakets 3 versetzt angeordnet sein. Damit lässt sich der Montageprozess des Rotors 4 vereinfachen.

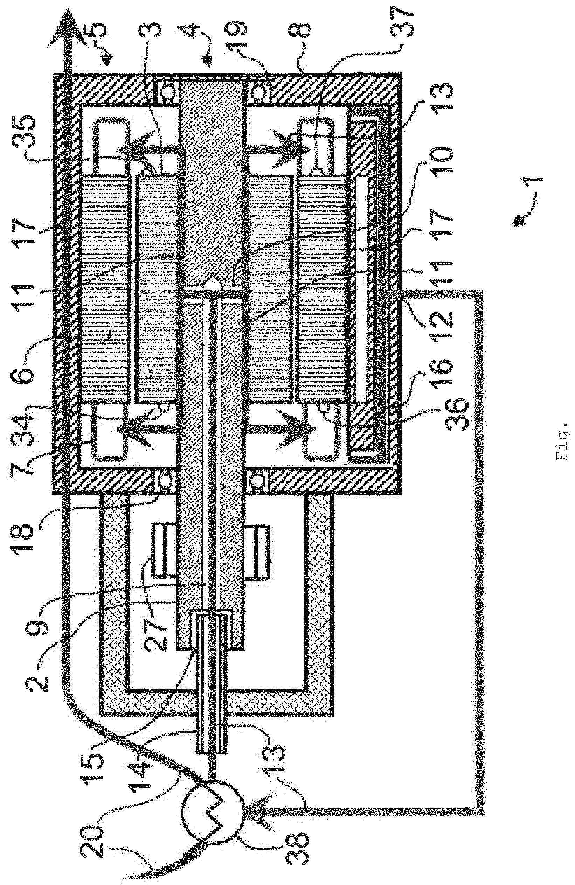

Der Axialkanal 11 gemäß der Figur ist zwischen der Hohlwelle 2 und dem Rotorblechpaket 3 angeordnet und ist von der Hohlwelle 2 radial innen begrenzt und von dem Rotorblechpaket 3 radial außen begrenzt. Dazu weist gemäß Figur 3 das Rotorblechpaket 3 an seiner radialen Innenseite 3 eine Aussparung auf, die den Axialkanal 11 bildet. Zusätzlich oder alternativ ist denkbar, dass die Hohlwelle 2 an seiner radialen Außenseite eine Aussparung aufweist, die den Axialkanal 11 bildet.

Alternativ kann der Axialkanal 11 auch derart angeordnet sein, dass er in Radialrichtung innen und außen von dem Rotorblechpaket 3 begrenzt ist, was bedeutet dass er vollumfänglich von dem Rotorblechpaket 3 begrenzt ist. Insbesondere kann der Axialkanal 11 im Wesentlichen in der Mitte von der radialen Innenseite des Rotorblechpakets 3 und der radialen Außenseite des Rotorblechpakets 3 angeordnet sein.

Die Figur zeigt, dass die elektrische Maschine 1 einen Stator 5 aufweist, der radial außerhalb des Rotors 4 angeordnet ist. Der Stator 5 weist ein Statorblechpaket 6 auf. Das Statorblechpaket 6 weist eine erste axiale Stirnseite 36 und eine zweite axiale Stirnseite 37 auf, die die in Axialrichtung äußeren Enden des Statorblechpakets 6 sind. Dabei ist die erste axiale Stirnseite 36 des Statorblechpakets 6 in der gleichen Axialposition wie und fluchtend mit der ersten axialen Stirnseite 34 des Rotorblechpakets 3 angeordnet und die zweite axiale Stirnseite 37 des Statorblechpakets 6 ist in der gleichen Axialposition wie und fluchtend mit der zweiten axialen Stirnseite 35 des Rotorblechpakets 3 angeordnet. Weiterhin weist der Stator 5 eine Wicklung elektrischer Leiter auf, die an den axialen Stirnseiten 36, 37 des Statorblechpakets 6 aus dem Statorblechpaket 6 austreten und axial außerhalb des Statorblechpakets 6 Wickelköpfe 7 bilden. Damit trifft im Betrieb der elektrischen Maschine 1 das stromab dem Axialkanal 11 nach radial außen strömbare Kühlfluid auf die Wickelköpfe 7 und kühlt diese somit.

Wie es aus der Figur ersichtlich ist, weist die elektrische Maschine 1 ein Maschinengehäuse 8 auf, das den Rotor 4 und den Stator 5 einhaust und zudem eingerichtet ist, das Kühlfluid stromab seines Austritts aus den axialen Stirnseiten 34, 35 des Rotorblechpakets 3 aufzufangen. Zum Weiterleiten des von dem Maschinengehäuse 8 aufgefangenen Kühlfluids weist das Maschinengehäuse 8 ein an dem unteren Ende des Maschinengehäuses 8 angeordnetes Durchgangsloch 12 auf, via das das Kühlfluid aus dem Maschinengehäuse 8 austreten kann. Zudem trägt das Maschinengehäuse 8 ein erstes Lager 18 und ein zweites Lager 19, die in zwei verschiedenen Axialpositionen die Hohlwelle 2 drehbar lagern.

Weiterhin zeigt die Figur, dass das Maschinengehäuse 8 einen Gehäusekühlkanal 17 aufweist, durch das zum Kühlen des Maschinengehäuses 8 ein weiteres Kühlfluid strömbar ist. Beispielsweise kann die elektrische Maschine 1 eingerichtet sein, in ihrem Betrieb eine Wasser und Glykol aufweisende Mischung als das Kühlfluid durch den Gehäusekühlkanal 17 zu strömen.

Der Kreislauf der Kühlfluidströmung 13 des Kühlfluids erfolgt im Betrieb der elektrischen Maschine 1 wie folgt: Nach dem Eintritt in das Rohr 14 strömt das Kühlfluid in den Hohlwellenaxialkanal 9 und anschließend via den Radialkanal 10 in den Axialkanal 11. In dem Axialkanal 11 teilt sich die Kühlfluidströmung 13, um zu der ersten axialen Stirnseite 34 und zu der zweiten axialen Stirnseite 35 des Rotorblechpakets 3 zu strömen. Dort tritt das Kühlfluid aus dem Axialkanal 11 aus, wird durch die im Betrieb der elektrischen Maschine 1 vorhandenen Fliehkräfte nach radial außen transportiert und trifft dort auf die Wickelköpfe 7. Anschließend sammelt sich durch die Schwerkraft das Kühlfluid am Boden des Maschinengehäuses 8. An dem Boden des Maschinengehäuses 8 ist eine Mehrzahl an Löchern vorgesehen, die via einen Ablaufkanal 16 mit dem Durchgangsloch 12 verbunden sind. Um das Kühlfluid via das Durchgangsloch aus dem Maschinengehäuse 8 abzuführen und in das Rohr 14 zu strömen, kann stromab des Durchgangslochs 12 und stromauf des Rohrs 14 eine Fördereinrichtung angeordnet sein. Insbesondere in dem Fall, dass die elektrische Maschine in einem Fahrzeug eingebaut ist, kann die Fördereinrichtung eingerichtet sein, das Getriebeöl zu fördern. Um das Kühlfluid vor seinem Eintritt in das Rohr 14 zu kühlen, ist stromab dem Durchgangsloch 12 und stromauf des Rohrs 14 ein Wärmetauscher 38 vorgesehen. Der Wärmetauscher 38 kann, wie in der Figur dargestellt, mit dem weiteren Kühlfluid gekühlt werden. Dabei ist der Kühlfluidstrom 20 des weiteren Kühlfluids derart, dass das Kühlfluid zuerst durch den Wärmetauscher 38 und anschließend durch das Maschinengehäuse 8 strömt.

### Bezugszeichenliste

- 1: Elektrische Maschine
- 2: Hohlwelle
- 3: Rotorblechpaket
- 4: Rotor
- 5: Stator
- 6: Statorblechpaket
- 7: Wickelkopf
- 8: Maschinengehäuse
- 9: Hohlwellenaxialkanal
- 10: Radialkanal
- 11: Axialkanal
- 12: Durchgangsloch
- 13: Kühlfluidströmung
- 14: Rohr
- 15: Spaltdichtung
- 16: Absaugkanal
- 17: Gehäusekühlkanal
- 18: erstes Lager
- 19: zweites Lager
- 20: Kühlfluidstrom des weiteren Kühlfluids
- 27: Zahnrad
- 34: erste Stirnseite des Rotorblechpakets
- 35: zweite Stirnseite des Rotorblechpakets
- 36: erste Stirnseite des Statorblechpakets
- 37: zweite Stirnseite des Statorblechpakets
- 38: Wärmetauscher

## Patentansprüche

1. Elektrische Maschine (1) mit einem Rotor (4), der eine Hohlwelle (2), die in ihrem Inneren einen sich in Axialrichtung erstreckenden Hohlwellenaxialkanal (9) begrenzt, in den im Betrieb der elektrischen Maschine (1) ein Kühlfluid einströmbar ist, ein radial außen an der Hohlwelle (2) angebrachtes Rotorblechpaket (3), das zwei axiale Stirnseiten (34, 35) aufweist, und einen von dem Rotorblechpaket (3) begrenzten, sich in der Axialrichtung von der einen der beiden Stirnseiten (34) des Rotorblechpakets (3) zu der anderen der beiden Stirnseiten (35) des Rotorblechpakets (3) erstreckenden Axialkanal (11) aufweist, der fluidleitend mit dem Hohlwellenaxialkanal (9) verbunden ist, so dass im Betrieb der elektrischen Maschine (1) das Kühlfluid von dem Hohlwellenaxialkanal (9) via den Axialkanal (11) an die Stirnseiten (34, 35) strömbar ist und durch Fliehkraft stromab des Axialkanals (11) nach radial außen strömbar ist, wobei der Rotor (4) einen Radialkanal (10) aufweist, via den der Axialkanal (11) fluidleitend mit dem Hohlwellenaxialkanal (9) verbunden ist, und das Rotorblechpaket (3) mindestens einen Vorsprung aufweist, der von der radialen Innenseite des Rotorblechpakets (3) absteht, **dadurch gekennzeichnet, dass** die Hohlwelle (2) mindestens eine Aussparung aufweist, die in die radiale Außenseite der Hohlwelle (2) eingebracht ist, wobei der Vorsprung in die Aussparung eingreift und dass der Radialkanal (10) sich innerhalb des Vorsprungs erstreckt.

2. Elektrische Maschine (1) gemäß Anspruch 1, wobei die elektrische Maschine (1) einen Stator (5) aufweist, der radial außerhalb des Rotors (4) angeordnet ist, ein Statorblechpaket (6), das zwei axiale Stirnseiten (36, 37) aufweist, und eine Wicklung elektrischer Leiter aufweist, wobei die axialen Stirnseiten (36, 37) des Statorblechpakets (6) fluchtend mit den axialen Stirnseiten (34, 35) des Rotorblechpakets (3) angeordnet sind und die elektrischen Leiter an den axialen Stirnseiten (36, 37) des Statorblechpakets (6) aus dem Statorblechpaket (6) austreten und axial außerhalb des Statorblechpakets (6) Wickelköpfe (7) bilden, so dass das stromab des Axialkanals (11) nach radial außen strömbare Kühlfluid auf die Wickelköpfe (7) des Stators (5) treffen kann und diese somit kühlen kann.

3. Elektrische Maschine (1) gemäß Anspruch 1 oder 2, wobei der Axialkanal (11) zwischen der Hohlwelle (2) und dem Rotorblechpaket (3) angeordnet ist und von der Hohlwelle (2) und dem Rotorblechpaket (3) begrenzt ist.

4. Elektrische Maschine (1) gemäß Anspruch 3, wobei die Hohlwelle (2) und/oder das Rotorblechpaket (3) eine Aussparung aufweisen, die den Axialkanal (11) bilden.

5. Elektrische Maschine (1) gemäß einem der Ansprüche 1 oder 2, wobei der Axialkanal (11) in Radialrichtung innen und außen von dem Rotorblechpaket (3) begrenzt ist.

6. Elektrische Maschine gemäß einem der Ansprüche 1 bis 5, wobei das Kühlfluid elektrisch nicht leitfähig ist.

7. Elektrische Maschine gemäß Anspruch 6, wobei das Kühlfluid ein Öl, insbesondere ein Getriebeöl, ist.

8. Elektrische Maschine (1) gemäß einem der Ansprüche 1 bis 7, wobei eine Mehrzahl der Axialkanäle (11) vorgesehen ist, die in Umfangsrichtung gleichmäßig verteilt angeordnet sind.

9. Elektrische Maschine (1) gemäß einem der Ansprüche 1 bis 8, wobei die elektrische Maschine (1) ein Maschinengehäuse (8) aufweist, das den Rotor (4) und den Stator (5) einhaust.

10. Elektrische Maschine (1) gemäß Anspruch 9, wobei das Maschinengehäuse (8) ein an dem unteren Ende des Maschinengehäuses (8) angeordnetes Durchgangsloch (12) aufweist, via das das Kühlfluid aus dem Maschinengehäuse 8 austreten kann.

11. Elektrische Maschine (1) gemäß Anspruch 9 oder 10, wobei das Maschinengehäuse (8) einen Gehäusekühlkanal (17) aufweist, durch das zum Kühlen des Maschinengehäuses (8) ein weiteres Kühlfluid strömbar ist, insbesondere ist die elektrische Maschine (1) eingerichtet eine Wasser und Glykol aufweisende Mischung durch den Gehäusekühlkanal (17) zu strömen.

12. Elektrische Maschine gemäß einem der Ansprüche 1 bis 11, wobei die elektrische Maschine (1) ein Elektromotor, insbesondere für ein Fahrzeug, ist.

13. Fahrzeug mit einer elektrischen Maschine (1) gemäß einem der Ansprüche 1 bis 12, wobei das Fahrzeug eine Fördereinrichtung aufweist, die eingerichtet ist das Kühlfluid in die Hohlwelle (2) einzuströmen , wobei die Fördereinrichtung insbesondere eingerichtet ist, ein Getriebeöl des Fahrzeugs zu fördern.

## Claims

1. Electric machine (1) with a rotor (4) which has a hollow shaft (2), which, in its interior, delimits a hollow shaft axial channel (9) which extends in the axial direction, and into which a cooling fluid can flow during operation of the electric machine (1); a rotor laminated core (3) which is attached radially on the outside to the hollow shaft (2) and has two axial end sides (34, 35); and an axial channel (11) which is delimited by the rotor laminated core (3), extends in the axial direction from the one of the two end sides (34) of the rotor laminated core (3) to the other one of the two end sides (35) of the rotor laminated core (3), and is connected in a fluid-conducting manner to the hollow shaft axial channel (9), with the result that, during operation of the electric machine (1), the cooling fluid can flow from the hollow shaft axial channel (9) via the axial channel (11) in the end sides (34, 35), and can flow radially to the outside as a result of centrifugal force downstream of the axial channel (11), the rotor (4) having a radial channel (10), via which the axial channel (11) is connected in a fluid-conducting manner to the hollow shaft axial channel (9), and the rotor laminated core (3) having at least one projection which protrudes from the radial inner side of the rotor laminated core (3), **characterized in that** the hollow shaft (2) has at least one cut-out which is made in the radial outer side of the hollow shaft (2), the projection engaging into the cut-out, and **in that** the radial channel (10) extends within the projection.

2. Electric machine (1) according to Claim 1, the electric machine (1) having a stator (5) which is arranged radially outside the rotor (4), a stator laminated core (6) which has two axial end sides (36, 37), and a winding of electric conductors, the axial end sides (36, 37) of the stator laminated core (6) being arranged flush with the axial end sides (34, 35) of the rotor laminated core (3), and the electric conductors exiting from the stator laminated core (6) on the axial end sides (36, 37) of the stator laminated core (6) and forming winding heads (7) axially outside the stator laminated core (6), with the result that the cooling fluid which can flow radially to the outside downstream of the axial channel (11) can impinge on the winding heads (7) of the stator (5) and can therefore cool them.

3. Electric machine (1) according to Claim 1 or 2, the axial channel (11) being arranged between the hollow shaft (2) and the rotor laminated core (3), and being delimited by the hollow shaft (2) and the rotor laminated core (3).

4. Electric machine (1) according to Claim 3, the hollow shaft (2) and/or the rotor laminated core (3) having a cut-out, which cut-outs form the axial channel (11) .

5. Electric machine (1) according to either of Claims 1 and 2, the axial channel (11) being delimited in the radial direction on the inside and on the outside by the rotor laminated core (3).

6. Electric machine according to one of Claims 1 to 5, the cooling fluid being electrically non-conductive.

7. Electric machine according to Claim 6, the cooling fluid being an oil, in particular a transmission oil.

8. Electric machine (1) according to one of Claims 1 to 7, a plurality of axial channels (11) being provided which are arranged distributed uniformly in the circumferential direction.

9. Electric machine (1) according to one of Claims 1 to 8, the electric machine (1) having a machine housing (8) which encloses the rotor (4) and the stator (5).

10. Electric machine (1) according to Claim 9, the machine housing (8) having a through-hole (12) which is arranged at the lower end of the machine housing (8) and via which the cooling fluid can exit from the machine housing (8).

11. Electric machine (1) according to Claim 9 or 10, the machine housing (8) having a housing cooling channel (17), through which a further cooling fluid can flow in order to cool the machine housing (8), the electric machine (1) being set up, in particular, for a mixture which comprises water and glycol to flow through the housing cooling channel (17).

12. Electric machine according to one of Claims 1 to 11, the electric machine (1) being an electric motor, in particular for a vehicle.

13. Vehicle with an electric machine (1) according to one of Claims 1 to 12, the vehicle having a conveying device which is set up for the cooling fluid to flow into the hollow shaft (2), the conveying device being set up, in particular, to convey a transmission oil of the vehicle.

## Revendications

1. Machine électrique (1) comprenant un rotor (4) qui comporte un arbre creux (2) délimitant en son intérieur un conduit axial (9) qui s'étend dans la direction axiale et dans lequel un fluide de refroidissement peut s'écouler pendant le fonctionnement de la machine électrique (1), un noyau stratifié (3) fixé du côté radialement extérieur à l'arbre creux (2) et pourvu de deux faces frontales axiales (34, 35}, et un conduit axial (11) délimité par le noyau stratifié (3) du rotor et s'étendant dans la direction axiale depuis l'une des deux faces frontales (34) du noyau stratifié (3) du rotor à l'autre des deux faces frontales (35) du noyau stratifié (3) du rotor et relié fluidiquement au conduit axial (9) de l'arbre creux, de sorte que pendant le fonctionnement de la machine électrique (1) le fluide de refroidissement puisse s'écouler du conduit axial (9) de l'arbre creux vers les faces frontales (34, 35) par le biais du conduit axial (11) et puisse s'écouler radialement vers l'extérieur en aval du conduit axial (11) par la force centrifuge, le rotor (4) comportant un conduit radial (10) par le biais duquel le conduit axial (11) est relié fluidiquement au conduit axial (9) de l'arbre creux, et le noyau stratifié (3) du rotor comportant au moins une saillie qui fait saillie du côté intérieur radial du noyau stratifié (3) du rotor, **caractérisé en ce que** l'arbre creux (2) comporte au moins un évidement qui est ménagé dans le côté extérieur radial de l'arbre creux (2), la saillie s'engageant dans l'évidement, et **en ce que** le conduit radial (10) s'étend à l'intérieur de la saillie.

2. Machine électrique (1) selon la revendication 1, la machine électrique (1) comportant un stator (5) qui est disposé radialement à l'extérieur du rotor (4), un noyau stratifié (6) qui comporte deux faces frontales axiales (36, 37) et un enroulement de conducteurs électriques, les faces frontales axiales (36, 37) du noyau stratifié (6) du stator étant disposées en alignement avec les faces frontales axiales (34, 35) du noyau stratifié (3) du rotor et les conducteurs électriques sortant du noyau stratifié (6) du stator au niveau des faces frontales axiales (36, 37) du noyau stratifié (6) du stator et formant des têtes d'enroulement (7) axialement à l'extérieur du noyau stratifié (6) du stator de sorte que le fluide de refroidissement, qui peut s'écouler radialement vers l'extérieur en aval du conduit axial (11), puisse être incident aux têtes d'enroulement (7) du stator (5) et ainsi refroidir celles-ci.

3. Machine électrique (1) selon la revendication 1 ou 2, le conduit axial (11) étant disposé entre l'arbre creux (2) et le noyau stratifié (3) du rotor et étant délimité par l'arbre creux (2) et le noyau stratifié (3) du rotor.

4. Machine électrique (1) selon la revendication 3, l'arbre creux (2) et/ou le noyau stratifié (3) du rotor comportant un évidement qui forme le conduit axial (11) .

5. Machine électrique (1) selon l'une des revendications 1 et 2, le conduit axial (11) étant délimité dans la direction radiale à l'intérieur et à l'extérieur par le noyau stratifié (3) du rotor.

6. Machine électrique selon l'une des revendications 1 à 5, le fluide de refroidissement étant électriquement non conducteur.

7. Machine électrique selon la revendication 6, le fluide de refroidissement étant une huile, en particulier une huile pour engrenages.

8. Machine électrique (1) selon l'une des revendications 1 à 7, une pluralité de conduits axiaux (11) étant prévus qui sont disposés de manière répartie uniformément dans la direction circonférentielle.

9. Machine électrique (1) selon l'une des revendications 1 à 8, la machine électrique (1) comportant un carter de machine (8) qui loge le rotor (4} et le stator (5).

10. Machine électrique (1) selon la revendication 9, le carter de machine (8) comportant un trou traversant (12) ménagé à l'extrémité inférieure du carter de machine (8) et permettant au fluide de refroidissement de sortir du carter de machine (8).

11. Machine électrique (1) selon la revendication 9 ou 10, le carter de machine (8) comportant un conduit de refroidissement de carter (17) à travers lequel un autre fluide de refroidissement peut s'écouler pour refroidir le carter de machine (8), en particulier la machine électrique (1) étant conçue pour faire circuler un mélange d'eau et de glycol à travers le conduit de refroidissement de carter (17).

12. Machine électrique selon l'une des revendications 1 à 11, la machine électrique (1) étant un moteur électrique, destiné en particulier à un véhicule.

13. Véhicule comprenant une machine électrique (1) selon l'une des revendications 1 à 12, le véhicule comportant un dispositif d'acheminement qui est conçu pour injecter le fluide de refroidissement dans l'arbre creux (2), le dispositif d'acheminement étant notamment conçu pour acheminer une huile pour engrenages du véhicule.
